# EUROPÄISCHE PATENTSCHRIFT

(11) **EP 2 266 388 B1**
(45) Veröffentlichungstag und Bekanntmachung des Hinweises auf die Patenterteilung: **15.02.2012**
(21) Anmeldenummer: 10450104.4
(22) Anmeldetag: 21.06.2010
(51) Int. Cl.: A01G 3/037

(54) **Elektrische Schere**
Electric cutter
Ciseaux électriques

(30) Priorität: 25.06.2009 AT 9752009
(43) Veröffentlichungstag der Anmeldung: 29.12.2010
(73) Patentinhaber: Lunatone Industrielle Elektronik GmbH, 1220 Wien (AT)
(72) Erfinder: Mair, Alexander, 2285 Breitstetten (AT)
(74) Vertreter: Matschnig, Franz

(56) Entgegenhaltungen:
- EP-A1- 0 291 431
- EP-A2- 0 803 186
- DE-U1- 8 814 543
- US-A- 3 178 816

## Beschreibung

Die Erfindung betrifft eine elektrische Schere mit den Merkmalen des Oberbegriffes des Anspruchs 1.

Weiters betrifft die Erfindung eine elektrische Schere mit den Merkmalen des Oberbegriffes des Anspruchs 3.

Eine elektrische Schere mit den Merkmalen des Oberbegriffes der Ansprüche 1 und 3 ist aus EP-A-0803 186 bekannt.

Eine elektrische Schere ist aus der EP 291431 B1 bekannt, welche zum Antreiben eines beweglichen Messers ein Spindelhubgetriebe aufweist, das aus einer Kugelgewindespindel und einer Kugelgewindemutter besteht, wobei die Kugelgewindespindel mit der Abtriebswelle eines elektrischen Getriebemotors verbunden ist. Der Getriebemotor ist in einem als Handgriff für die Schere ausgebildeten Scherengehäuse befestigt.

Die auf der Kugelgewindespindel vorgesehene Kugelgewindemutter ist über einen Lenker mit dem ebenfalls im Gehäuse schwenkbar gelagerten Messer verbunden, das mit einem gehäusefesten Messer scherenartig zusammen wirkt. Der Lenker greift dabei an der Kugelgewindemutter über einen diese Mutter formschlüssig aufnehmenden Kopf an, auf dem zusätzlich ein Steuerhebel zur Betätigung des Getriebemotors gelagert ist.

Die Spindel ist zwischen der Kugelgewindemutter und dem Getriebemotor über radiale und axiale Wälzlager gelagert. Durch diese Lagerung können nur geringe radiale, seitliche Kräfte aufgenommen werden, da ansonsten die Gefahr des Verbiegens der Spindel gegeben ist, wodurch auch die Schnittkräfte, die auf ein zu schneidendes Gut ausgeübt werden können, beschränkt sind.

Eine weitere elektrische Schere ist aus der AT 501 590 B1 bekannt, bei welcher die Kugelgewindemutter drehbar aber axial unverschieblich gehaltert und mit dem Antrieb eines Getriebemotors verbunden ist. Eine Kugelgewindespindel ist in der Kugelgewindemutter angeordnet und ist gegenüber Verdrehung abgestützt. An dieser Kugelgewindespindel ist der Lenker an einer Anlenkachse angelenkt und bei einer axialen Bewegung der Kugelgewindespindel wird über den Lenker das bewegliche Messer verschwenkt.

Auch wenn sich in der konkreten Ausgestaltung die Scheren aus der EP 291 431 B1 und der AT 501 590 B1 unterscheiden und in der AT 501 590 B1 gewisse Nachteile einer Schere wie in der EP 291 431 B1 beschrieben behoben sind, so ist beiden gemeinsam, dass der Lenker, mit welchem das bewegliche Messer bewegt wird, sich möglichst wenig aus der Achse der Getriebespindel heraus bewegt, weil bei beiden Scheren die radialen Kräfte auf die Spindel möglichst gering gehalten werden müssen. Beispielsweise liegt der Lenker der Schere aus der AT 501 590 B1 im geschlossenen Zustand der Messer im Wesentlichen in der Achse der Gewindespindel und bewegt sich nur um einen kleinen Winkel aus dieser Achse heraus, wenn das Messer geöffnet wird.

Es ergibt sich bei den bekannten Scheren somit das Problem, dass die Kraft, welche über den gesamten Öffnungsbereich auf ein zu schneidendes Gut von den Messern ausgeübt werden kann, über den gesamten Öffnungsbereich der Messer relativ linear verläuft, d.h. auch bei dickeren Ästen etc., wo unter Umständen eine größere Kraft zum Schneiden notwendig wäre, kann keine wesentlich höhere Kraft als bei dünneren Ästen ausgeübt werden.

Es ist eine Aufgabe, eine eingangs erwähnte elektrische Schere, insbesondere wie sie in der EP 291 431 B1 gezeigt ist, dahingehend zu verbessern, dass bei größeren Öffnungswinkeln der Messer eine größere Schneidekraft auf das zu schneidende Gut ausgeübt werden kann als bei geringen Öffnungswinkeln.

Diese Aufgabe wird mit einer eingangs erwähnten Schere dadurch gelöst, dass erfindungsgemäß die Gewindespindel in ihrem vorderen, dem Motor abgewandten Bereich mittels zumindest eines Lagers radial unbeweglich gelagert ist.

Die radial unbewegliche Lagerung der Gewindespindel in ihrem vorderen (= messerseitigen) Bereich erlaubt es, die Anlenkgeometrie Gewindemutteranlenkbereich - Lenker - Messeranlenkbereich - Drehachse des beweglichen Messers derart auszulegen, dass mit zunehmendem Öffnungswinkel des beweglichen Messers die ausübbare Schneidkraft zunimmt. Dadurch steigen auch die radialen Kräfte auf die Gewindemutter und entsprechend auf die Gewindespindel, welche aber durch die Radiallagerung im vorderen Bereich, wo diese Kräfte am größten sind, aufgenommen werden kennen. Damit kann ein Verbiegen der Gewindespindel, insbesondere im ihrem vorderen Bereich der größten auftretenden Kräfte Gewindespindel, insbesondere im ihrem vorderen Bereich der größten auftretenden Kräfte verhindert werden.

Weiters ist es von Vorteil, wenn zusätzlich zu dem zumindest einen vorderen Lager zumindest ein Gewindemutter-Lager vorgesehen ist, an welchem die Gewindemutter radial unbeweglich und axial verschieblich gelagert ist. Auf diese Weise kann die Gewindespindel de facto völlig frei von Radialkräften gehalten werden. Die Gewindespindel kann entsprechend relativ dünn ausgebildet werden.

Die oben angeführte Aufgabe wird weiter mit einer eingangs erwähnten Schere gelöst, bei welcher erfindungsgemäß der Lenker an der Gewindemutter an einem Gewindemutteranlenkbereich angreift, und zumindest ein Lager vorgesehen ist, mittels welchem der Gewindemutteranlenkbereich radial unbeweglich und axial verschieblich gelagert ist.

Auf diese Weise kann die Gewindemutter und in weiterer Folge auch die Gewindespindel über ihre gesamte Länge praktisch frei von Radialkräften gehalten werden.

Eine radiale unverschiebliche Lagerung der Gewindemutter ist nicht unbedingt notwendig, wichtig ist die radiale Lagerung des Gewindemutteranlenkbereiches. Bei einer konkreten Ausgestaltung der Erfindung ist vorgesehen, dass das zumindest eine Lager zur Lagerung des Gewindemutteranlenkbereiches ein Gewindemutter-Lager ist, an welchem die Gewindemutter radial unbeweglich und axial verschieblich gelagert ist.

Wenn sich dieses Lager für den Gewindemutteranlenkbereich über den gesamten Verfahrbereich der Gewindemutter erstreckt, so kann die Gewindespindel über ihre gesamte Länge praktisch frei von Radialkräften gehalten werden.

Zusätzlich kann es noch von Vorteil sein, wenn weiters die Gewindespindel in ihrem vorderen, dem Motor abgewandten Bereich mittels zumindest eines Lagers radial unbeweglich gelagert ist. Allfällige auf die Gewindespindel wirken Radialkräfte können damit im vorderen Bereich, wo die größten Radialkräfte auftreten, abgestützt werden.

Weiters ist vorgesehen, dass die Gewindespindel in ihrem vorderen Bereich mit einem Lager axial unbeweglich gelagert ist.

Für den Fall, dass die Gewindespindel auch radial unbeweglich gelagert ist, kann es dann von Vorteil sein, wenn das zumindest eine Lager zur Lagerung des vorderen Bereiches der Gewindespindel ein kombiniertes Radial- und Axiallager, z.B. ein Wälzlager ist.

Desweiteren ist es zweckmäßig, wenn die Gewindespindel auch in ihrem hinteren (= motorseitigen) Bereich mit zumindest einem Lager axial unbeweglich gelagert ist.

Zweckmäßigerweise ist das zumindest eine hintere Lager in dem Motor untergebracht, grundsätzlich kann die Gewindespindel aber auch außerhalb des Motors in ihrem hinteren Bereich axial gelagert sein.

Um allfällig auftretende radiale Kräfte auf die Gewindespindel nicht nur im vorderen Bereich ableiten zu können, ist weiters bei einer vorteilhaften Variante noch vorgesehen, dass die Gewindespindel in ihrem hinteren Bereich mit zumindest einem Lager radial unbeweglich gelagert ist.

Zweckmäßig ist es dabei, wenn das zumindest eine hintere Lager ein kombiniertes Axial- und Radiallager ist.

Grundsätzlich kann das vordere Lager beispielsweise am Gehäuse abgestützt werden, allerdings treten hier teilweise große Kräfte auf und das Gehäuse wäre entsprechend stabil auszugestalten.

Wesentlich vorteilhafter ist es, wenn das zumindest eine Lager zur Lagerung des vorderen Bereiches der Gewindespindel an dem feststehenden Messer abgestützt ist, wodurch das Gehäuse kräftefrei gehalten werden kann.

Aus denselben Gründen ist es von Vorteil, wenn sich das Gewindemutter-Lager in einem vorderen Bereich an dem unbeweglichen Messer abstützt.

Die oben beschriebenen konstruktiven Merkmale erlauben es nun, dass die Lage des Gewindemutteranlenkbereiches und des Messeranlenkbereiches derart gewählt werden, dass der Winkel zwischen dem Hebelarm des Lenkers und der Spindelachse im maximal geöffneten Zustand des beweglichen Messers deutlich größer als Null ist. Damit kann aber auch eine deutliche Erhöhung der Schneidkraft erzielt werden.

Eine für eine Reihe von Anwendung ausreichende Kraft kann bereits erreicht werden, wenn der Winkel im maximal geöffneten Zustand größer als 30° ist.

Noch höhere Kräfte sind erzielbar, wenn der Winkel im maximal geöffneten Zustand größer als 45° oder größer als 60° ist.

Besonders vorteilhaft ist es, wenn der Winkel im maximal geöffneten Zustand in etwa bei 80° liegt.

Weiters ist es günstig, wenn die Lage des Gewindemutteranlenkbereiches und des Messeranlenkbereiches derart gewählt sind, dass der Winkel zwischen dem Hebelarm des Lenkers und der Spindelachse im geschlossenen Zustand des beweglichen Messers größer als Null ist, damit auch schon bei geringen Öffnungswinkeln ausreichende Kräfte aufgebracht werden können.

Typischerweise ist der Winkel im geschlossenen Zustand in etwa 30°, wobei sich für die meisten Anwendungen herausgestellt hat, dass es von Vorteil ist wenn der Winkel im geschlossenen Zustand in etwa bei 20° liegt. Auch Winkel im geschlossenen Zustand von ca. 10° sind noch denkbar.

Typischerweise liegt der Öffnungswinkel bei einem Maximalwert von etwa 80° im maximal offenen Zustand der Messer und bei 20° im geschlossenen Zustand der Messer.

Im Folgenden ist die Erfindung an Hand der Zeichnung näher erläutert. In dieser zeigt
Fig. 1 eine erste Variante einer erfindungsgemäßen Scheren in einem vertikalen Längsschnitt mit vollständig geöffneten Messern,
Fig. 2 die Schere aus Figur 1 mit halboffenen Messern,
Fig. 3 die Schere aus Figur 1 und 2 in geschlossener Position der Messer,
Fig. 4 eine horizontalen Längsschnitt durch eine Schere nach Figur 1- 3,
Fig. 5 den beispielhaften Verlauf des von dem beweglichen Messer ausgeübten Drehmoment in Abhängigkeit vom Öffnungswinkel der Messer,
Fig. 6 eine weitere Variante einer erfindungsgemäßen Schere, und
Fig. 7 noch eine weitere Variante einer erfindungsgemäßen Schere.

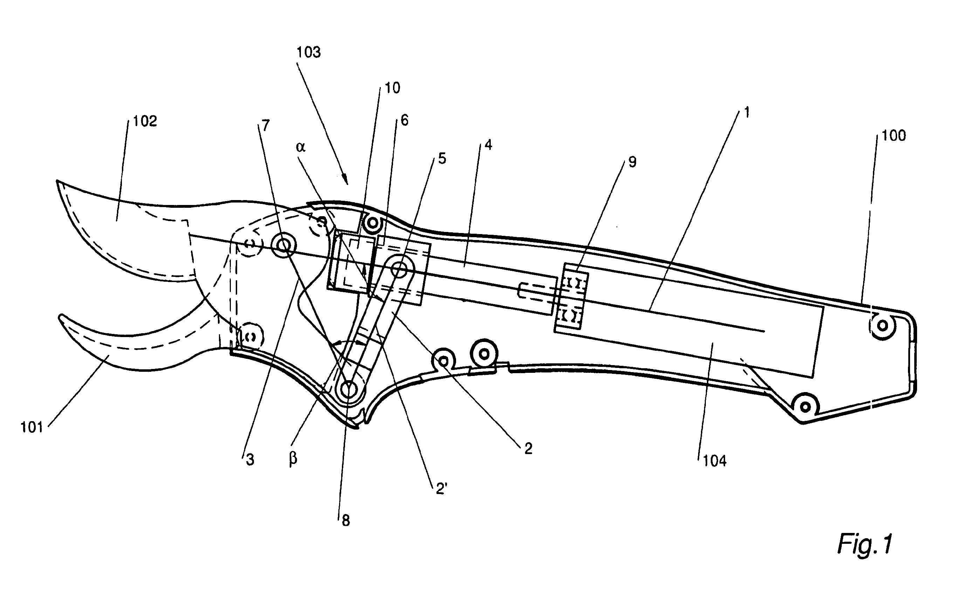

Figur 1 zeigt eine elektrische Schere mit einem Scherengehäuse 100, in welchem ein feststehendes Messer 101 und ein um eine Drehachse 7 schwenkbar gelagertes bewegliches Messer 102 angeordnet sind.

Weiters ist in dem Gehäuse ein elektrischer Motor 104 zum Antreiben eines Spindelhubgetriebes 103 vorgesehen, welches Spindelhubgetriebe 103 mit dem beweglichen Messer 102 über einen Lenker 2 verbunden ist. Das Spindelhubgetriebe 103 umfasst eine Gewindespindel 4 mit einer Spindelachse 1, welche von dem Getriebemotor 104 angetrieben ist, wobei die Gewindespindel 4 in axialer Richtung unbeweglich gelagert ist, derart dass die Gewindespindel 4 lediglich drehbar ist.

Der Motor 104 ist beispielsweise über einen Montageträger (nicht dargestellt) am festen Messer 101 fixiert, der Träger und das fixe Messer können beispielsweise einstückig ausgebildet sein.

Auf der Gewindespindel 4 sitzt eine Gewindemutter 6, welche drehfest in Bezug auf die Gewindespindel 4 gelagert ist und lediglich in axialer Richtung bei einer Verdrehung der Gewindespindel 4 bewegt wird. Der Lenker 2 greift an der Gewindemutter 6 an einem Gewindemutteranlenkbereich 5 an, weiters greift der Lenker 2 an einem Messeranlenkbereich 8 des beweglichen Messers 102 an.

Die Gewindemutter 6 stellt entsprechend eine Führung für den Gewindemutteranlenkbereich 5 dar, auf der Gewindespindel 4 bewegt sich somit bei Verdrehen der Gewindespindel die Führung (= Gewindemutter 6) für das Gelenk (=Gewindemutteranlenkbereich 5) hin und her.

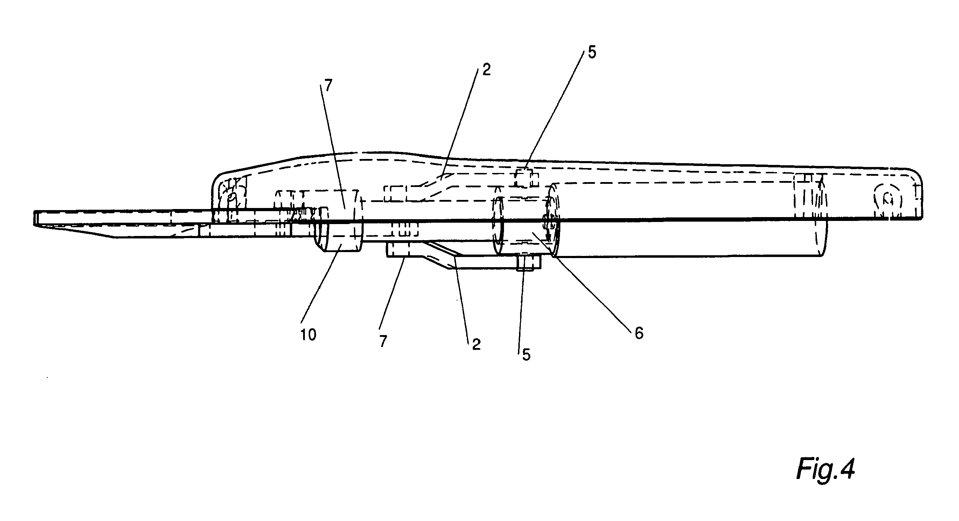

Der Lenker 2 besteht, wie dies Figur 4 zu entnehmen ist, vorzugsweise aus zwei Schenkeln zu beiden Seiten der Spindelachse 1.

Der Lenker 2 greift entweder direkt an der Gewindemutter 6 an oder an einem nicht dargestellten, die Gewindemutter 6 formschlüssig aufnehmenden Kopf.

Bei den Anlenkbereichen 5, 8 handelt es sich beispielsweise um Anlenkachsen, an welchen der Lenker 2 angreift.

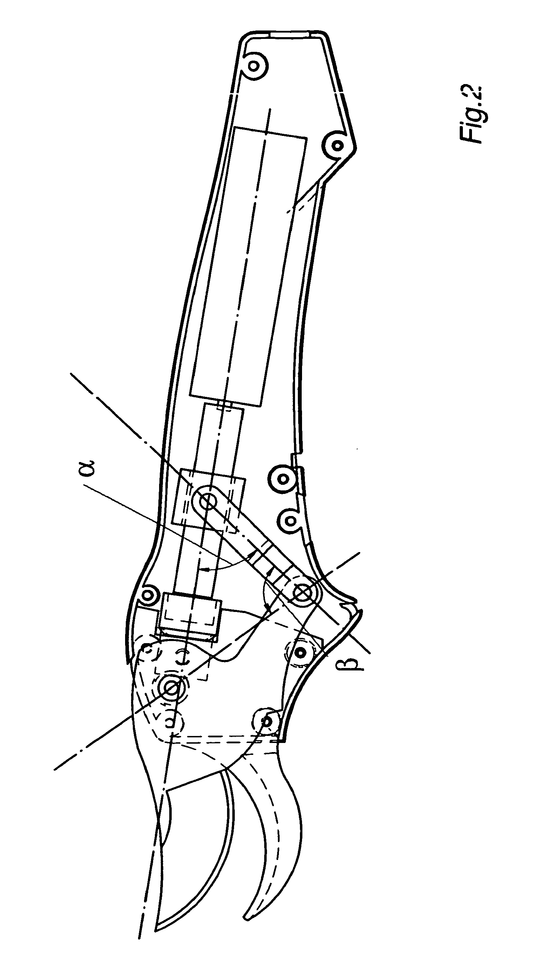

Bei der in den Figuren 1 - 4 gezeigten Variante einer Schere ist nun die Gewindespindel 4 in ihrem vorderen, dem Getriebemotor 104 abgewandten Bereich mittels zumindest eines Lagers 10 radial unbeweglich gelagert.

Die radial unbewegliche Lagerung der Gewindespindel in ihrem vorderen Bereich erlaubt es, die Anlenkgeometrie Gewindemutteranlenkbereich - Lenker - Messeranlenkbereich - Drehachse des beweglichen Messers 102 derart auszulegen, dass mit zunehmendem Öffnungswinkel des beweglichen Messers 102 die ausübbare Schneidkraft zunimmt. Dadurch steigen auch die radialen Kräfte auf die Gewindemutter 6 und entsprechend auf die Gewindespindel 4, welche aber durch die Radiallagerung im vorderen Bereich, wo diese Kräfte am größten sind, aufgenommen werden können. Damit kann ein Verbiegen der Gewindespindel 4, insbesondere in ihrem vorderen Bereich der größten auftretenden Kräfte verhindert werden.

Die Gewindespindel 4 kann in ihrem vorderen Bereich mit einem Lager 10 weiters noch axial unbeweglich gelagert sein, wobei es dann zweckmäßig ist, wenn das Lager 10 zur Lagerung des vorderen Bereiches der Gewindespindel 4 ein kombiniertes Radial- und Axiallager ist.

Weiters ist die Gewindespindel 4 auch in ihrem hinteren Bereich mit einem Lager 9 axial unbeweglich gelagert, wobei bei der gezeigten Variante das hintere Lager 9 in dem Getriebemotor 104 untergebracht ist.

Um allfällig auftretende radiale Kräfte auf die Gewindespindel 4 nicht nur im vorderen Bereich ableiten zu können, kann auch noch vorgesehen sein, dass die Gewindespindel 4 in ihrem hinteren Bereich mit zumindest einem Lager 9 radial unbeweglich gelagert ist, wobei dann vorzugsweise das hintere Lager 9 ein kombiniertes Axial- und Radiallager ist.

Das vordere Lager 10 zur Lagerung des vorderen Bereiches der Gewindespindel 4 ist an dem feststehenden Messer 101 abgestützt, wodurch das Gehäuse kräftefrei gehalten werden kann.

Die oben beschriebenen konstruktiven Merkmale erlauben es nun, dass die Lage des Gewindemutteranlenkbereiches 5 und des Messeranlenkbereiches 8 derart gewählt werden können, dass der Winkel α zwischen dem Hebelarm 2' des Lenkers 2 und der Spindelachse 1 im maximal geöffneten Zustand des beweglichen Messers 102 (Figur 1) deutlich größer als Null ist. Damit kann aber auch eine deutliche Erhöhung der Schneidkraft erzielt werden.

Bei der gezeigten vorteilhaften Variante liegt der Winkel α im maximal geöffneten Zustand in etwa bei 80°.

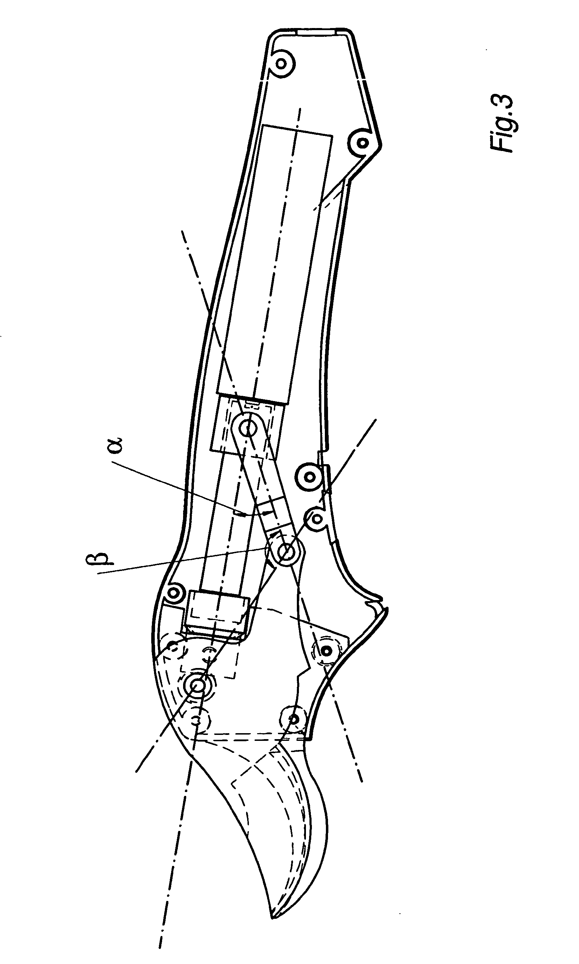

Weiters ist es günstig, wenn die Lage des Gewindemutteranlenkbereiches 5 und des Messeranlenkbereiches 8 derart gewählt sind, dass der Winkel α zwischen dem Hebelarm 2' des Lenkers 2 und der Spindelachse 1 im geschlossenen Zustand des beweglichen Messers 102 (Figur 3) größer als Null ist, damit auch schon bei geringen Öffnungswinkeln ausreichende Kräfte aufgebracht werden können.

Bei der gezeigten vorteilhaften Variante liegt der Winkel α im geschlossenen Zustand in etwa bei 20°.

Nachdem der Motorstrom proportional dem Drehmoment ist, ergibt sich durch die erfindungsgemäße Konstruktion weiters auch noch eine verbesserte Kraftauflösung im Bereich fast geschlossener Messer.

Durch eine Strommessung kann daher auch einfach zwischen Holz- und Metalldrähten unterschieden werden, und es können darauf basierend Maßnahmen vorgesehen werden, mittels welcher ein ungewolltes Durchtrennen von Stützdrähten vermieden werden kann.

Wie in den Figuren zu erkennen liegt der Anlenkbereich 5 des Lenkers 2 an der Gewindemutter 6 genau über der Spindelachse 1. Auf diese Weise können unnötige zusätzliche Kräfte/Momente auf die Gewindemutter 6 vermieden werden; grundsätzlich kann der Gewindemutteranlenkbereich 5 aber auch außerhalb der Spindelachse 1 liegen.

Ebenso ist zu erkennen, dass die Drehachse 7 für das bewegliche Messer 102 sehr nahe an der Spindelachse 1 liegt, grundsätzlich sind aber auch hier Abweichungen möglich oder die Drehachse 7 geht exakt durch die Spindelachse.

Durch Verschieben der Drehachse 7 in Bezug auf die Spindelachse 1 können verschiedene Kräfteverläufe über den Öffnungswinkel erreicht werden.

Von besonderem Vorteil ist aber, wenn sich im geschlossenen Zustand der Messer 101, 102 die Spindelachse 1 und somit die Zugrichtung zwischen dem Messerdrehpunkt 7 und dem Anlenkdrehpunkt 8 verläuft. Dann bleibt das Gehäuse nahezu kräftefrei.

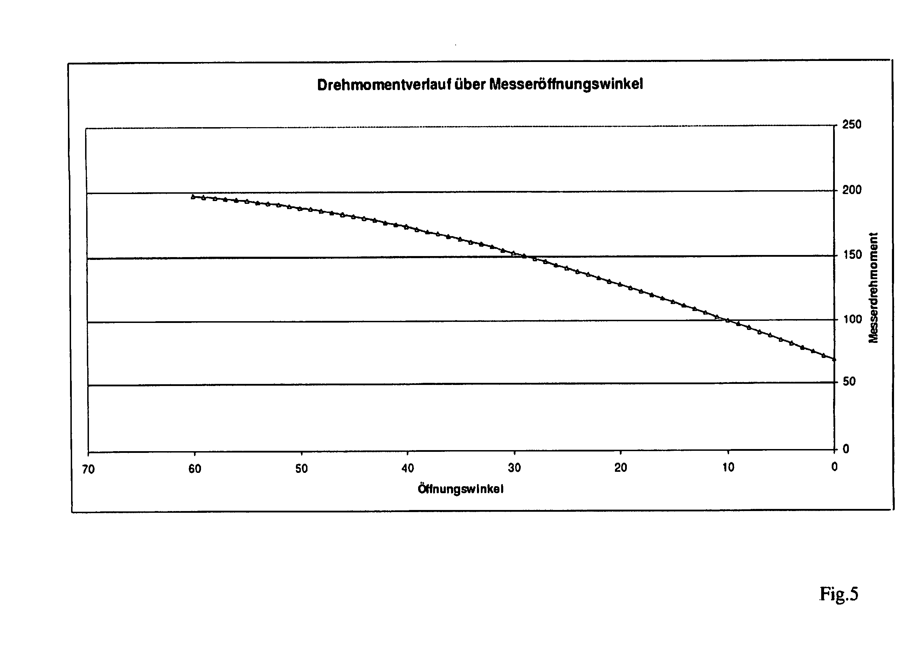

Figur 5 zeigt einen solchen beispielhaften Verlauf des auf das bewegliche Messer 102 wirkenden Drehmomentes in Abhängigkeit vom Messeröffnungswinkel. Mit zunehmendem Öffnungswinkel des/ der Messer kommt es zu einer deutlichen Erhöhung des Drehmomentes, dementsprechend kann mit einer erfindungsgemäßen Schere bei großen Öffnungswinkeln eine hohe Schneidkraft erzielt werden.

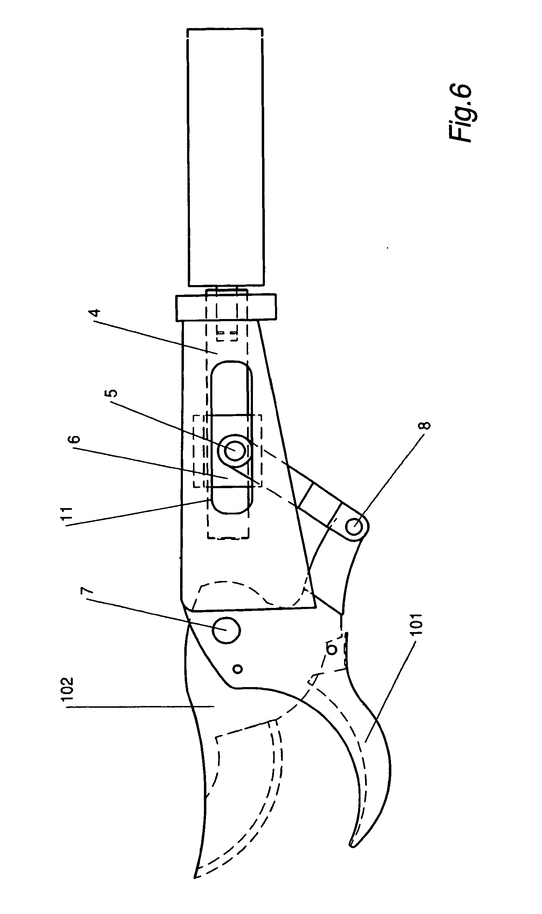

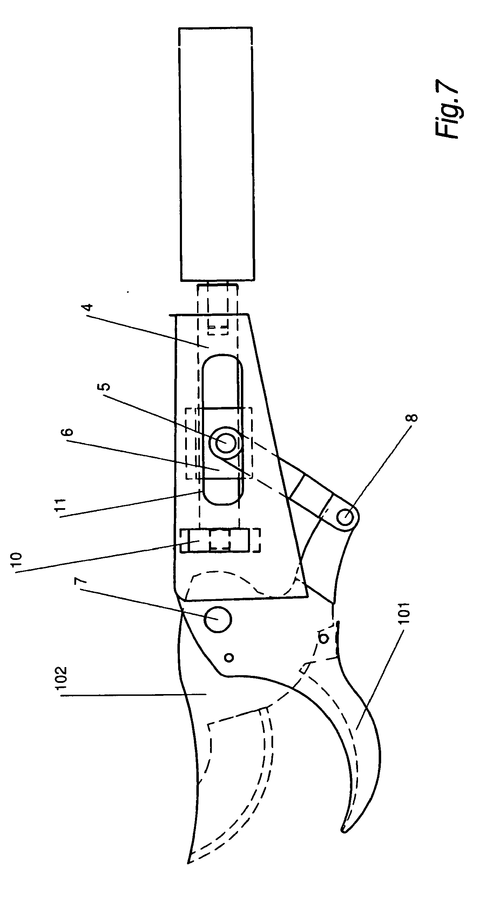

Figur 6 zeigt eine Variante der oben beschriebenen Schere, bei welcher zusätzlich zu dem vorderen Lager 10 ein Gewindemutter-Lager 11 vorgesehen ist, an welchem die Gewindemutter 6 radial unbeweglich und axial verschieblich gelagert ist. Grundsätzlich von Bedeutung bei dieser Ausgestaltung (und auch jener nach Figur 7) ist dabei, dass der Gewindemutteranlenkbereich 5 radial unverschieblich gelagert ist, damit die Mutter 6 und in weiterer Folge die Gewindespindel 4 frei von Radialkräften bleiben. Bei der gezeigten Variante ist dazu gleich die gesamte Mutter 6 entsprechend gelagert.

Auf diese Weise kann die Gewindespindel de facto völlig frei von Radialkräften gehalten werden. Die Gewindespindel kann entsprechend relativ dünn ausgebildet werden. Ansonsten ist die Schere aus Figur 6 identisch zu jener aus Figur 1 - 4 ausgebildet, auch wenn nicht alle technischen Merkmale der Schere in Figur 6 gezeigt sind.

Figur 7 schließlich zeigt noch eine Variante der Erfindung, bei welcher die Gewindespindel 4 zwar axial unverschieblich gelagert ist, radial unverschieblich aber nur die Gewindemutter 4 mit einem entsprechenden Gewindemutter-Lager 11 gelagert ist.

In beiden Fällen stützt sich das Gewindemutter-Lager 11 in einem vorderen Bereich an dem unbeweglichen Messer 101 ab.

Wenn sich das Gewindemutter-Lager 11 wie gezeigt über den gesamten Verfahrbereich der Gewindemutter 6 erstreckt, so kann die Gewindespindel 4 über ihre gesamte Länge praktisch frei von Radialkräften gehalten werden.

Gegenüber dem Stand der Technik, bei welchem relativ lange Lenker (im Vergleich zur Länge des Hebelarms des beweglichen Messers) notwendig sind, die sich außerdem nur wenig von der Spindelachse wegbewegen, können bei der vorliegende Erfindung in Relation gesehen kürzere Hebel verwendet werden, welche sich außerdem deutlich von der Spindelachse wegbewegen können/sollen. Dadurch kann auch die Gesamtlänge der Schere verkürzt werden.

Gewindemutter-Lager, feststehendes Messer und Motorträger können bei einer bevorzugten Variante fest miteinander verbunden sein und sind zweckmäßiger Weise sogar aus einem Stück gefertigt.

Die Betätigung der Schere erfolgt in bekannter Weise über einen Steuerhebel, Steuerknopf etc., worauf an dieser Stelle aber nicht näher eingegangen wird.

## Patentansprüche

1. Elektrische Schere mit einem feststehenden Messer (101) und einem um eine Drehachse (7) schwenkbar gelagerten beweglichen Messer (102), mit einer durch einen elektrischen Motor (104) antreibbaren Gewindespindel (4), wobei die Gewindespindel (4) in axialer Richtung gelagert ist, derart dass die Gewindespindel (4) lediglich drehbar ist, und wobei auf der Gewindespindel (4) eine Gewindemutter (6) sitzt, welche drehfest in Bezug auf die Gewindespindel (4) gelagert ist und lediglich in axialer Richtung bei einer Verdrehung der Gewindespindel (4) bewegt wird, und wobei ein Lenker (2) die Gewindemutter (6) mit dem beweglichen Messers (102) verbindet, die Gewindespindel (4) in ihrem vorderen, dem Motor (104) abgewandten Bereich mittels zumindest eines Lagers (10) radial unbeweglich gelagert ist und der Lenker (2) an der Gewindemutter (6) an einem Gewindemutteranlenkbereich (5) angreift,
**dadurch gekennzeichnet, dass**
der Lenker (2) am Gewindemutteranlenkbereich (5) und an einem Messeranlenkbereich (8) des beweglichen Messers (102) angeordnet ist und der Winkel (α) zwischen dem Hebelarm (2') des Lenkers (2) und der Spindelachse (1) im maximal geöffneten Zustand größer als 30° ist.

2. Schere nach Anspruch 1, **dadurch gekennzeichnet, dass** zumindest ein Lager (11) vorgesehen ist, mittels welchem der Gewindemutteranlenkbereich (5) radial unbeweglich und axial verschieblich gelagert ist.

3. Elektrische Schere mit einem feststehenden Messer (101) und einem um eine Drehachse (7) schwenkbar gelagerten beweglichen Messer (102), mit einer durch einen elektrischen Motor (104) antreibbaren Gewindespindel (4), wobei die Gewindespindel (4) in axialer Richtung gelagert ist, derart dass die Gewindespindel (4) lediglich drehbar ist, und wobei auf der Gewindespindel (4) eine Gewindemutter (6) sitzt, welche drehfest in Bezug auf die Gewindespindel (4) gelagert ist und lediglich in axialer Richtung bei einer Verdrehung der Gewindespindel (4) bewegt wird, und wobei ein Lenker (2) die Gewindemutter (6) mit dem beweglichen Messers (102) verbindet, wobei der Lenker (2) an der Gewindemutter (6) an einem Gewindemutteranlenkbereich (5) angreift, wobei zumindest ein Lager (11) vorgesehen ist, mittels welchem der Gewindemutteranlenkbereich (5) radial unbeweglich und axial verschieblich gelagert ist,
**dadurch gekennzeichnet, dass**
der Lenker (2) am Gewindemutteranlenkbereich (5) und an einem Messeranlenkbereich (8) des beweglichen Messers (102) angeordnet ist und der Winkel (α) zwischen dem Hebelarm (2') des Lenkers (2) und der Spindelachse (1) im maximal geöffneten Zustand größer als 30° ist.

4. Schere nach Anspruch 3, **dadurch gekennzeichnet, dass** das zumindest eine Lager (11) zur Lagerung des Gewindemutteranlenkbereichs (5) ein Gewindemutter-Lager (11) ist, an welchem die Gewindemutter (6) radial unbeweglich und axial verschieblich gelagert ist.

5. Schere nach Anspruch 3 oder 4, **dadurch gekennzeichnet, dass** die Gewindespindel (4) in ihrem vorderen, dem Motor (104) abgewandten Bereich mittels zumindest eines Lagers (10) radial unbeweglich gelagert ist.

6. Schere nach Anspruch 1, 2 oder 5, **dadurch gekennzeichnet, dass** die Gewindespindel (4) in ihrem vorderen Bereich weiters mit einem Lager (10) axial unbeweglich gelagert ist.

7. Schere nach einem der Ansprüche 1, 2, 4 oder 5, **dadurch gekennzeichnet, dass** das zumindest eine Lager (10) zur Lagerung des vorderen Bereiches der Gewindespindel (4) ein kombiniertes Radial- und Axiallager (10) ist.

8. Schere nach einem der Ansprüche 1 bis 7, **dadurch gekennzeichnet, dass** die Gewindespindel (4) in ihrem hinteren Bereich mit zumindest einem Lager (9) axial unbeweglich gelagert ist.

9. Schere nach Anspruch 8, **dadurch gekennzeichnet, dass** das zumindest eine hintere Lager (9) in dem Motor (104) untergebracht ist.

10. Schere nach einem der Ansprüche 1 bis 9, **dadurch gekennzeichnet, dass** die Gewindespindel (4) in ihrem hinteren Bereich mit zumindest einem Lager (9) radial unbeweglich gelagert ist.

11. Schere nach einem der Ansprüche 8 bis 10, **dadurch gekennzeichnet, dass** das zumindest eine hintere Lager (9) ein kombiniertes Axial- und Radiallager ist.

12. Schere nach einem der Ansprüche 1 bis 11, **dadurch gekennzeichnet, dass** das zumindest eine Lager (10) zur Lagerung des vorderen Bereiches der Gewindespindel (4) an dem feststehenden Messer (101) abgestützt ist.

13. Scheren nach einem der Ansprüche 2 bis 12, **dadurch gekennzeichnet, dass** sich das Gewindemutter-Lager (11) in einem vorderen Bereich an dem unbeweglichen Messer (101) abstützt.

14. Schere nach einem der Ansprüche 3 bis 13, **dadurch gekennzeichnet, dass** die Lage des Gewindemutteranlenkbereiches (5) und des Messeranlenkbereiches (8) derart gewählt sind, dass der Winkel (α) zwischen dem Hebelarm (2') des Lenkers (2) und der Spindelachse (1) im maximal geöffneten Zustand des beweglichen Messers (102) deutlich größer als Null ist.

15. Schere nach einem der Ansprüche 1 bis 14, **dadurch gekennzeichnet, dass** der Winkel (α) im maximal geöffneten Zustand größer als 60° ist.

16. Schere nach einem der Ansprüche 1 bis 15, **dadurch gekennzeichnet, dass** der Winkel (α) im maximal geöffneten Zustand in etwa 80° ist.

17. Schere nach einem der Ansprüche 1 bis 16, **dadurch gekennzeichnet, dass** die Lage des Gewindemutteranlenkbereiches (5) und des Messeranlenkbereiches (8) derart gewählt sind, dass der Winkel (α) zwischen dem Hebelarm (2') des Lenkers (2) und der Spindelachse (1) im geschlossenen Zustand des beweglichen Messers (102) größer als Null ist.

18. Schere nach Anspruch 17, **dadurch gekennzeichnet, dass** der Winkel (α) im geschlossenen Zustand größer als Null und kleiner als 30° ist.

19. Schere nach Anspruch 17 oder 18, **dadurch gekennzeichnet, dass** der Winkel (α) im geschlossenen Zustand größer als Null und kleiner als 20° ist.

20. Schere nach einem der Ansprüche 17 bis 19, **dadurch gekennzeichnet, dass** der Winkel (α) im geschlossenen Zustand größer als Null und kleiner als 10° ist.

## Claims

1. An electric cutter, comprising a fixed knife (101) and a movable knife (102) which is pivotably supported around a rotational axis (7), a threaded spindle (4) which can be driven by an electric motor (104), with the threaded spindle (4) being mounted in the axial direction, such that the threaded spindle (4) is merely rotatable, and with a threaded nut (6) being disposed on the threaded spindle (4), which threaded nut is mounted in a torsion-proof manner with respect to the threaded spindle (4) and is only moved in the axial direction during rotation of the threaded spindle (4), and with a connecting rod (2) connecting the threaded nut (6) with the movable knife (102), the threaded spindle (4) being mounted in a radially immovable way by means of at least one bearing (10) at its front region facing away from the motor (104) and the connecting rod (2) acting on the threaded nut (6) on an articulation area (5) of the threaded nut, **characterized in that** the connecting rod (2) is arranged on an articulation area (5) of the threaded nut and on an articulation area (8) of the knife of the movable knife (102), and the angle (α) between the lever arm (2') of the connecting rod (2) and the spindle axis (1) being larger than 30° in the maximum opened state.

2. A cutter according to claim 1, **characterized in that** at least one bearing (11) is provided, by means of which the articulation area (5) of the threaded nut is mounted to be radially immovable and axially displaceable.

3. An electric cutter, comprising a fixed knife (101) and a movable knife (102) which is pivotably supported around a rotational axis (7), a threaded spindle (4) which can be driven by an electric motor (104), with the threaded spindle (4) being mounted in the axial direction, such that the threaded spindle (4) is merely rotatable, and with a threaded nut (6) being disposed on the threaded spindle (4), which threaded nut is mounted in a torsion-proof manner with respect to the threaded spindle (4) and is only moved in the axial direction during rotation of the threaded spindle (4), and with a connecting rod (2) connecting the threaded nut (6) with the movable knife (102), with the connecting rod (2) acting on the threaded nut (6) in an articulation area (5) of the threaded nut, with at least one bearing (11) being provided, by means of which the articulation area (5) of the threaded nut is mounted in a radially immovable and axially displaceable manner, **characterized in that** the connecting rod (2) is arranged on an articulation area (5) of the threaded nut and an articulation area (8) of the knife of the movable knife (102), and the angle (α) between the lever arm (2') of the connecting rod (2) and the spindle axis (1) is larger than 30° in the maximum opened state.

4. A cutter according to claim 3, **characterized in that** the at least one bearing (11) for bearing the articulation area (5) of the threaded nut is a threaded nut bearing (11), on which the threaded nut (6) is mounted in a radially immovable and axially displaceable manner.

5. A cutter according to claim 3 or 4, **characterized in that** the threaded spindle (4) is mounted by means of at least one bearing (10) in a radially immovable way at its front end facing away from the motor (104).

6. A cutter according to claim 1, 2 or 5, **characterized in that** the threaded spindle (4) is mounted further with a bearing (10) in an axially immovable way in its front area.

7. A cutter according to one of the claims 1, 2, 4 or 5, **characterized in that** the at least one bearing (10) for mounting the front area of the threaded spindle (4) is a combined radial and axial bearing (10).

8. A cutter according to one of the claims 1 to 7, **characterized in that** the threaded spindle (4) is mounted in its rear area with at least one bearing (9) in an axially immovable way.

9. A cutter according to claim 8, **characterized in that** the at least one rear bearing (9) is housed in the motor (104).

10. A cutter according to one of the claims 1 to 9, **characterized in that** the threaded spindle (4) is mounted in its rear area with at least one bearing (9) in a radially immovable way.

11. A cutter according to one of the claims 8 to 10, **characterized in that** the at least one rear bearing (9) is a combined axial and radial bearing.

12. A cutter according to one of the claims 1 to 11, **characterized in that** the at least one bearing (10) is supported on the fixed knife (101) for supporting the front area of the threaded spindle (4).

13. Cutters according to one of the claims 2 to 12, **characterized in that** the threaded nut bearing (11) rests in a front area on the immovable knife (101).

14. A cutter according to one of the claims 3 to 13, **characterized in that** the position of the articulation area (5) of the threaded nut and the articulation area (8) of the knife are chosen in such a way that the angle (α) between the lever arm (2') of the connecting rod (2) and the spindle axis (1) is considerably larger than zero in the maximally opened state of the movable knife (102).

15. A cutter according to one of the claims 1 to 14, **characterized in that** the angle (α) is larger than 60° in the maximally opened state.

16. A cutter according to one of the claims 1 to 15, **characterized in that** the angle (α) is approximately 80° in the maximally opened state.

17. A cutter according to one of the claims 1 to 16, **characterized in that** the position of the articulation area (5) of the threaded nut and the articulation area (8) of the knife are chosen in such a way that the angle (α) between the lever arm (2') of the connecting rod (2) and the spindle axis (1) is larger than zero in the closed state of the movable knife (102).

18. A cutter according to claim 17, **characterized in that** the angle (α) is larger than zero and smaller than 30° in the closed state.

19. A cutter according to claim 17 or 18, **characterized in that** the angle (α) is larger than zero and smaller than 20° in the closed state.

20. A cutter according to one of the claims 17 to 19, **characterized in that** the angle (α) is larger than zero and smaller than 10° in the closed state.

## Revendications

1. Cisaille électrique, comportant une lame fixe (101) et une lame mobile (102) montée pivotante autour d'un axe de rotation (7), comportant une broche filetée (4), actionnable par un moteur électrique (104), ladite broche filetée (4) étant montée dans la direction axiale de telle sorte que la broche filetée (4) est uniquement mobile en rotation, et un écrou fileté (6) étant posé sur la broche filetée (4), lequel est immobile en rotation par rapport à la broche filetée (4) et est déplacé uniquement dans la direction axiale lors d'une rotation de la broche filetée (4), et une biellette (2) reliant l'écrou fileté (6) à la lame mobile (102), la broche filetée (4), dans sa partie antérieure, opposée au moteur (104), étant montée de manière immobile radialement au moyen d'au moins un palier (10), et la biellette (2) entrant en contact avec l'écrou fileté (6) au niveau d'une zone d'articulation (5) de l'écrou,
**caractérisée en ce que**
la biellette (2) est agencée au niveau de la zone d'articulation (5) de l'écrou et au niveau d'une zone d'articulation (8) de la lame mobile (102), et l'angle (α) formé entre le bras de levier (2') de la biellette (2) et l'axe (1) de la broche est supérieur à 30° dans la position d'ouverture maximale.

2. Cisaille selon la revendication 1, **caractérisée en ce qu'**il est prévu au moins un palier (11) au moyen duquel la zone d'articulation (5) de l'écrou est immobilisée radialement et est mobile axialement.

3. Cisaille électrique, comportant une lame fixe (101) et une lame mobile (102) montée pivotante autour d'un axe de rotation (7), comportant une broche filetée (4), actionnable par un moteur électrique (104), ladite broche filetée (4) étant montée dans la direction axiale de telle sorte que la broche filetée (4) est uniquement mobile en rotation, et un écrou fileté (6) étant posé sur la broche filetée (4), lequel est monté immobile en rotation par rapport à la broche filetée (4) et est déplacé uniquement dans la direction axiale lors d'une rotation de la broche filetée (4), et une biellette (2) reliant l'écrou fileté (6) à la lame mobile (102), la biellette (2) entrant en contact avec l'écrou fileté (6) au niveau d'une zone d'articulation (5) de l'écrou, au moins un palier (11) étant prévu, au moyen duquel la zone d'articulation (5) de l'écrou est montée de manière immobile radialement et de manière mobile axialement,
**caractérisée en ce que**
la biellette (2) est agencée au niveau de la zone d'articulation (5) de l'écrou et au niveau d'une zone d'articulation (8) de la lame mobile (102), et l'angle (α) formé entre le bras de levier (2') de la biellette (2) et l'axe (1) de la broche est supérieur à 30° dans la position d'ouverture maximale.

4. Cisaille selon la revendication 3, **caractérisée en ce que** ledit au moins un palier (11) pour le support de la zone d'articulation (5) de l'écrou est un palier pour écrou fileté (11), sur lequel l'écrou fileté (6) est monté de manière immobile radialement et de manière mobile axialement.

5. Cisaille selon la revendication 3 ou 4, **caractérisée en ce que** la broche filetée (4), dans sa partie antérieure, opposée au moteur (104), est montée de manière immobile radialement au moyen d'au moins un palier (10).

6. Cisaille selon la revendication 1, 2 ou 5, **caractérisée en ce que** la broche filetée (4), dans sa partie antérieure, est montée en outre avec un palier (10) de manière immobile axialement.

7. Cisaille selon la revendication 1, 2, 4 ou 5, **caractérisée en ce que** ledit au moins un palier (10) pour le support de la partie antérieure de la broche filetée (4) est un palier radial et axial (10) combiné.

8. Cisaille selon l'une quelconque des revendications 1 à 7, **caractérisée en ce que** la broche filetée (4), dans sa partie postérieure, est montée au moyen d'au moins un palier (9) de manière immobile axialement.

9. Cisaille selon la revendication 8, **caractérisée en ce que** ledit au moins un palier (9) postérieur est logé dans le moteur (104).

10. Cisaille selon l'une quelconque des revendications 1 à 9, **caractérisée en ce que** la broche filetée (4), dans sa partie postérieure, est montée au moyen d'au moins un palier (9) de manière immobile radialement.

11. Cisaille selon l'une quelconque des revendications 8 à 10, **caractérisée en ce que** ledit au moins un palier (9) postérieur est un palier axial et radial combiné.

12. Cisaille selon l'une quelconque des revendications 1 à 11, **caractérisée en ce que** ledit au moins un palier (10) pour le support de la partie antérieure de la broche filetée (4) est en appui sur la lame fixe (101).

13. Cisaille selon l'une quelconque des revendications 2 à 12, **caractérisée en ce que** le palier pour écrou fileté (11) est en appui dans une partie antérieure sur la lame fixe (101).

14. Cisaille selon l'une quelconque des revendications 3 à 13, **caractérisée en ce que** la position de la zone d'articulation (5) de l'écrou et la position de la zone d'articulation (8) de la lame sont choisies de telle sorte que l'angle (α) formé entre le bras de levier (2') de la biellette (2) et l'axe (1) de la broche est nettement supérieur à zéro dans la position d'ouverture maximale de la lame mobile (102).

15. Cisaille selon l'une quelconque des revendications 1 à 14, **caractérisée en ce que** l'angle (α) est supérieur à 60° dans la position d'ouverture maximale.

16. Cisaille selon l'une quelconque des revendications 1 à 15, **caractérisée en ce que** l'angle (α) est égal à 80° environ dans la position d'ouverture maximale.

17. Cisaille selon l'une quelconque des revendications 1 à 16, **caractérisée en ce que** la position de la zone d'articulation (5) de l'écrou et la position de la zone d'articulation (8) de la lame sont choisies de telle sorte que l'angle (α) formé entre le bras de levier (2') de la biellette (2) et l'axe (1) de la broche est supérieur à zéro dans la position de fermeture de la lame mobile (102).

18. Cisaille selon la revendication 17, **caractérisée en ce que** l'angle (α) dans la position de fermeture est supérieur à zéro et inférieur à 30°.

19. Cisaille selon la revendication 17 ou 18, **caractérisée en ce que** l'angle (α) dans la position de fermeture est supérieur à zéro et inférieur à 20°.

20. Cisaille selon l'une quelconque des revendications 17 à 19, **caractérisée en ce que** l'angle (α) dans la position de fermeture est supérieur à zéro et inférieur à 10 ° .
